# EUROPÄISCHE PATENTSCHRIFT

(11) **EP 1 378 738 B1**
(45) Veröffentlichungstag und Bekanntmachung des Hinweises auf die Patenterteilung: **09.02.2005**
(21) Anmeldenummer: 03011951.5
(22) Anmeldetag: 27.05.2003
(51) Int. Cl.: G01M 1/02

(54) **Radschutzvorrichtung einer Radauswuchtmaschine**
Protection cover for wheel balancing machine
Carter de protection pour une machine d'équilibrage de roue de véhicule

(30) Priorität: 05.07.2002 DE 10230359
(43) Veröffentlichungstag der Anmeldung: 07.01.2004
(73) Patentinhaber: Snap-on Equipment GmbH, 64319 Pfungstadt (DE)
(72) Erfinder: Rothamel, Karl, 64372 Ober-Ramstadt (DE); Drechsler, Josef, 64319 Pfungstadt (DE)
(74) Vertreter: Nöth, Heinz

(56) Entgegenhaltungen:
- US-A- 5 804 723
- US-A1- 2002 026 823

## Beschreibung

Die Erfindung betrifft eine Radschutzvorrichtung einer Radauswuchtmaschine nach dem Oberbegriff des Patentanspruches 1.

### [Stand der Technik]

Es ist bekannt, an einer Radauswuchtmaschine eine Radschutzvorrichtung mit einem Radschutzbogen oder einer Radschutzhaube vorzusehen. Zum Messen der Radunwucht wird das an einer Hauptwelle der Auswuchtmaschine drehfest zentrierte Kraftfahrzeugrad auf Messgeschwindigkeit gebracht. Zum Schutz der Bedienungsperson wird vor dem Hochdrehen des Rades auf die Messdrehzahl der Radschutzbogen oder die Radschutzhaube aus einer geöffneten Position, in welcher der Radschutzbogen im wesentlichen vertikal angeordnet ist, in eine geschlossene Position gebracht, in welcher der Radschutzbogen in einer im wesentlichen horizontalen Anordnung über der Hauptwelle bzw. über das an der Hauptwelle befestigte Fahrzeugrad geschwenkt wird. Der Radschutzbogen, welcher in bekannter Weise aus einem biegesteifen Material besteht, umgibt den oben liegenden Umfang des auszuwuchtenden Rades. Auf diese Weise wird das Bedienungspersonal gegen vom drehenden Rad abfliegenden Teilen oder gegen Berührungen mit dem sich drehenden Rad geschützt.

Bekannte Radschutzvorrichtungen benötigen in der geöffneten Position aufgrund der bogenförmigen Wölbung der Radschutzhaube hinter der Auswuchtmaschine einen Raum, in welchen der gewölbte Radschutzbogen bzw. die gewölbte Haube geschwenkt werden kann. Dies bedingt eine Vergrößerung der Stellfläche für die Radauswuchtmaschine. Wenn die Radauswuchtmaschine in der Nähe einer Wand angeordnet wird, ist es erforderlich, die Maschine mit einem entsprechenden Abstand von der Wand entfernt anzuordnen, so dass bei geöffnetem Radschutz ausreichend Platz für die Wölbung des Radschutzbogens (Schutzhaube) vorhanden ist.

### [Aufgabe der Erfindung]

Aufgabe der Erfindung ist es, eine Radschutzvorrichtung einer Radauswuchtmaschine der eingangs genannten Art zu schaffen, mit welcher eine Verringerung der Stellfläche der Radauswuchtmaschine erreicht wird.

Diese Aufgabe wird erfindungsgemäß durch die kennzeichnenden Merkmale des Patentanspruches 1 gelöst.

Bei der Erfindung wird der Radschutzbogen im wesentlichen von einer biegeelastischen Platte gebildet, welche von einem zwischen der geöffneten und der geschlossenen Position beweglichen Rahmen geführt ist, wobei die biegeelastische Platte in der geöffneten Position eine im wesentlichen ebene (plane) Form aufweist und in der geschlossenen Position bogenförmig verformt ist.

Hierzu kann die biegeelastische Platte in ihrer Längsausdehnung zumindest an drei Stützstellen am insbesondere schwenkbaren Rahmen abgestützt sein. Vorzugsweise ist die Platte federnd biegeelastisch ausgebildet. Hierdurch ist gewährleistet, dass beim Zurückbringen der in der geschlossenen Position befindlichen zu dem Radschutzbogen verformten Platte in die geöffnete Position die Platte aufgrund ihrer Federeigenschaft selbsttätig in die ebene bzw. plane Form zurückfindet.

Um die biegeelastische Platte aus ihrer ebenen bzw. planen Gestalt in die Bogenform insbesondere Kreisbogenform zu bringen, sind an der Platte zumindest im Bereich der beiden Enden der Platte und in einem mittleren Bereich der Platte Stützstellen, welche vorzugsweise auf quer zur Längsausdehnung der Platte verlaufenden geraden Linien angeordnet sind, vorgesehen. Vorzugsweise ist eine der Stützstellen, sich in der Nähe des hinteren Endes der Platte angeordnet. Vorzugsweise ist die Platte in diesem Bereich reibungsarm beweglich, beispielsweise mit Hilfe von Rollen geführt. Ferner kann die etwa im mittleren Bereich der Platte liegende Abstützstelle ein oder mehrere Stützelemente, beispielsweise in Form von Rollen, aufweisen, an welchen die Platte gegenüber der Stützstelle beweglich geführt ist. Durch die vorzugsweise reibungsarme, bewegliche Führung der Platte gegenüber der Stützstelle und gegenüber dem Rahmen ist beim Verschwenken der Platte aus der geöffneten im wesentlichen vertikalen Position in die geschlossene im wesentlichen horizontale Position eine unbehinderte Verformung in die Bogenform gewährleistet. Vorzugsweise am vorderen Ende, welches entgegengesetzt zur Lagereinrichtung liegt, ist die Platte fest mit dem Rahmen verbunden. In der geschlossenen Position liegen die Stützlinien, an denen die bogenförmige Platte abgestützt ist, in den Ecken eines Dreiecks mit einer oberhalb der Hauptwelle liegenden Stützstelle, wodurch in Zusammenwirkung mit der Biegeelastizität der Platte die gewünschte Bogenform zur Bildung des Radschutzbogens, der die Schutzhaube bildet, erreicht wird.

Die Stützstelle, welche etwa im mittleren Bereich der Platte vorgesehen ist, befindet sich an einer gehäusefesten Stützeinrichtung oder vorzugsweise an einem Hebel, welcher am Maschinengehäuse schwenkbar gelagert ist. In der geöffneten Position verläuft der Hebel vorzugsweise etwa parallel zum Rahmen, der sich zusammen mit der die ebene Form aufweisenden Platte etwa in vertikaler Richtung ohne wesentlichen Platzbedarf an der Rückseite der Maschine erstreckt. Beim Verschwenken des Hebels in die geöffnete Position ist der Schwenkwinkel des Hebels vorzugsweise geringer als der Schwenkwinkel des bis etwa in die horizontale Lage verschwenkten Rahmens. Hierdurch ist gewährleistet, dass die am Hebel vorgesehene Stützstelle die oben liegende Spitze des Dreiecks der wenigstens drei vorgesehenen Stützstellen für die biegeelastische Platte bildet.

Die biegeelastische Platte kann vorzugsweise aus zwei oder mehreren Lagen gebildet sein. Eine relativ dünne außenliegende Lage mit im wesentlichen rechteckigen Zuschnitt kann hierbei als Schmutzfänger oder zum Auffangen sonstiger vom drehenden Rad wegfliegender Teile dienen. Eine zweite dicker bemessene elastische Lage bestimmt die insbesondere federnde biegeelastische Eigenschaft der Platte. Hierzu können zur Bestimmung örtlich unterschiedlicher Biegemomente unterschiedliche Breiten und anderer Dimensionierungen der elastischen Lage gewählt werden. Ferner können in der biegeelastischen Platte vorzugsweise diagonal verlaufende flache Rillen, die zu den Plattenenden hin auslaufen, vorgesehen sein. Auch hierdurch kann örtlich die elastische, insbesondere federnd elastische Biegbarkeit der Platte eingestellt werden.

### [Beispiele]

Anhand der Figuren wird an einem Ausführungsbeispiel die Erfindung noch näher erläutert.

Es zeigt
- Fig. 1: eine Seitenansicht einer Radauswuchtmaschine bei geöffnetem Radschutz;
- Fig. 2: das Ausführungsbeispiel der Fig. 1 bei geschlossenem Radschutz; und
- Fig. 3: die Vorderansicht des Ausführungsbeispiels bei geöffnetem Radschutz.

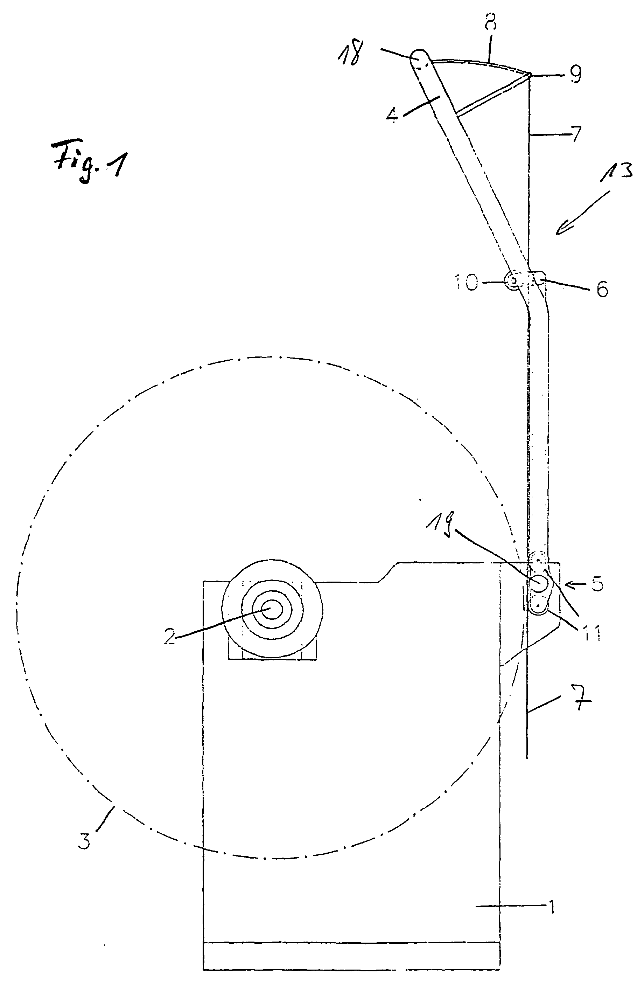

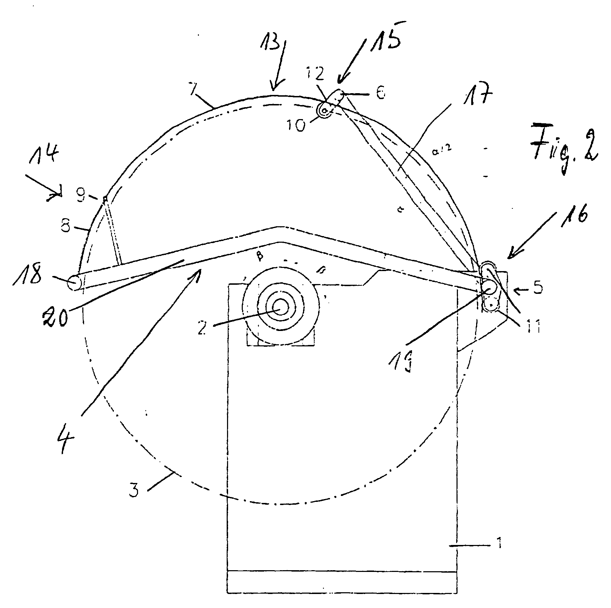

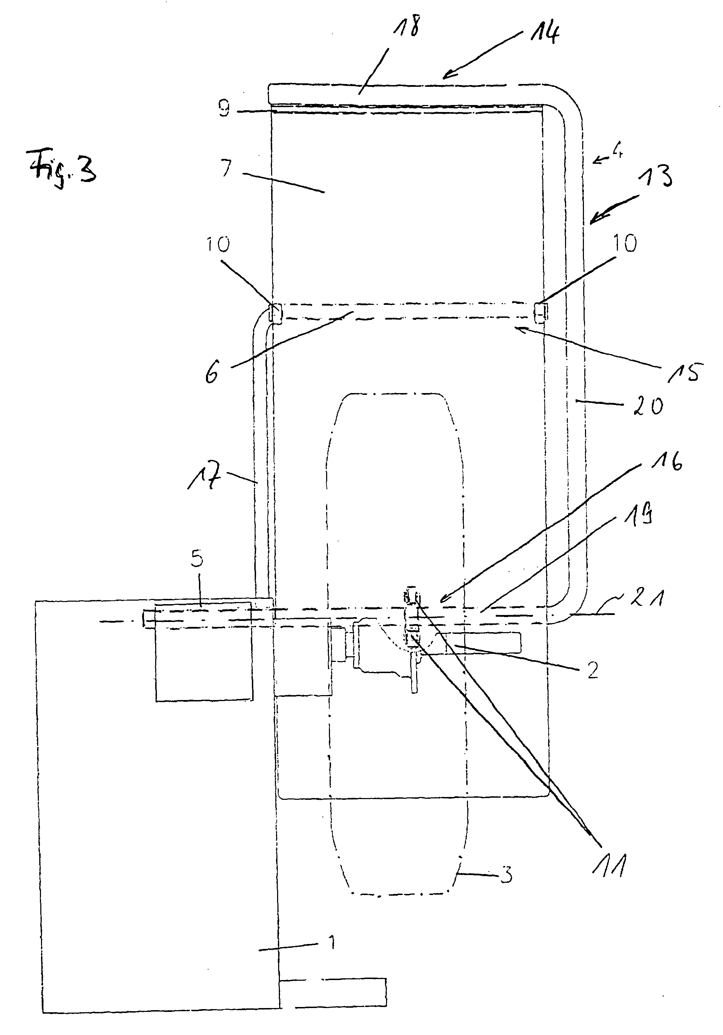

Das in den Figuren dargestellte Ausführungsbeispiel zeigt eine Auswuchtmaschine mit einer Radschutzvorrichtung. Von der Auswuchtmaschine ist ein Maschinengehäuse 1 dargestellt, an welchem eine Hauptwelle 2 drehbar gelagert ist. Für die Unwuchtmessung wird auf die Hauptwelle 2 mit Hilfe einer Spannvorrichtung ein Kraftfahrzeugrad 3, dessen Radumfang strichpunktiert dargestellt ist, aufgespannt. Während des Messlaufs wird zum Schutz der Bedienungsperson und der Maschinenumgebung ein Radschutzbogen 13 der Radschutzvorrichtung aus einer in den Fig. 1 und 3 dargestellten geöffneten Position in eine in der Fig. 2 dargestellte geschlossene Position gebracht. In der geöffneten Position nimmt der Radschutzbogen 13 eine im wesentlichen vertikale Stellung ein und in der geschlossenen Position ist der Radschutzbogen 13 im wesentlichen horizontal angeordnet. In der geöffneten Position wird ein freier Zugang zum Kraftfahrzeugrad gewährleistet. In der geschlossenen Position ist, wie die Fig. 2 zeigt, im wesentlichen der über der Hauptwelle 2 liegende Teil des Fahrzeugrades 3 durch den Radschutzbogen 13 abgedeckt.

Beim dargestellten Ausführungsbeispiel beinhaltet der Radschutzbogen 13 eine biegeelastische Platte 7, welche in der geöffneten Position (Fig. 1 und 3) eine ebene (plane) Form hat und beim Verschwenken in die geschlossene Position (Fig. 2) zu einem Bogen, insbesondere etwa Kreisbogen, verformt wird.

Die biegeelastische Platte 7 wird von einem schwenkbaren Rahmen 4 geführt. Der schwenkbare Rahmen 4 ist an der Rückseite (rechte Seite in den Fig. 1 und 2) des Maschinengehäuses 1 in einer Lagereinrichtung 5 schwenkbar gelagert. Der Rahmen besitzt ein sich im wesentlichen senkrecht zur Schwenkachse 21 der Lagereinrichtung 5 und die Längsrichtung der Platte 7 erstreckendes Rahmenteil 20, welches, wie die Fig. 2 zeigt, einen leicht gebogenen oder geknickten Verlauf aufweisen kann. Am hinteren Ende besitzt der Rahmen 4 ein quer zur Längsrichtung der Platte 7 verlaufendes Rahmenteil 19, welches in der Lagereinrichtung 5 um die Schwenkachse 21 schwenkbar gelagert ist. Am vorderen Ende besitzt der Rahmen 4 ein weiteres quer zur Längsrichtung der Platte 7 verlaufendes Rahmenteil 18. Die Rahmenteile 18, 19 erstrecken sich, wie insbesondere aus der Fig. 3 zu ersehen ist, im wesentlichen parallel zur Hauptwelle 2 der Auswuchtmaschine.

Am vorderen und am hinteren Ende des Rahmens 4 werden eine vordere Stützstelle 14 und eine hintere Stützstelle 16 für die im wesentlichen rechteckig ausgebildete biegeelastische Platte 7 gebildet. An der vorderen Stützstelle 14 ist die biegeelastische Platte 7 fest mit dem Rahmen 4 verbunden. Am Rahmen 4 ist hierzu ein festes Radschutzteil 8, welches ebenfalls eine vorgeformte Bogenform aufweisen kann, am Rahmen 4 befestigt. Das feste Radschutzteil 8 besitzt eine quer zur Längsrichtung der Platte 7 verlaufende Befestigungsstelle 9, in welcher das vordere Ende der Platte 7 am Radschutzteil 8 befestigt ist. Das Radschutzteil 8 kann auch seitliche etwa dreieckige Schutzteile aufweisen.

Am hinteren Ende des Rahmens 4 wird die biegeelastische Platte 7 gegenüber dem Rahmen und insbesondere gegenüber dem hinteren Rahmenteil 19 beweglich gelagert. Für eine reibungsarme bewegliche Lagerung sind hierzu Rollen 11 vorgesehen. Das Rollenpaar 11 befindet sich beim dargestellten Ausführungsbeispiel in der Längsmittellinie (Fig. 3) der rechteckigen Platte 7. Das Rollenpaar 11 kann hierzu an dem hinteren quer verlaufenden Rahmenteil 19 gelagert sein, wobei das Rahmenteil 19 sich gegenüber der Rollenlagerung drehen kann. Anstelle eines mittig angeordneten Rollenpaares 19 können auch zwei Rollenpaare im Bereich der Seitenkanten der Platte 19 vorgesehen sein.

Wie aus den Darstellungen der Figuren zu ersehen ist, verschiebt sich beim Verschwenken des Radschutzbogens 13 aus der geöffneten Stellung in die geschlossene Stellung der rückwärtige Teil der Platte 7 entlang der hinteren Stützstelle 16, welche im wesentlichen durch die Rollen 11 am Rahmen 4 gebildet wird. Die die Stützstelle 16 bildenden Rollen 11 liegen auf der Außenfläche der biegeelastischen Platte 7 auf.

Um die biegeelastische Platte 7 beim Bewegen aus der geöffneten Position in die geschlossene Position in eine gebogene Form zu bringen, ist eine weitere etwa in der Mitte der Platte 7 angreifende mittlere Stützstelle 15 vorgesehen. Beim dargestellten Ausführungsbeispiel ist diese Stützstelle am freien Ende eines eine Stützeinrichtung bildenden Hebels 17, der um die Schwenkachse 21 schwenkbar am Maschinengehäuse 1 gelagert ist, vorgesehen. Der Hebel 17 kann jedoch auch um eine separate an einer geeigneten Stelle des Maschinengehäuses 1 vorgesehen Schwenkachse schwenkbar gelagert sein. Am vorderen Ende besitzt der Hebel 17 einen quer zur Längsrichtung der Platte 7 verlaufenden Stützbügel 6. Der Stützbügel 6 erstreckt sich parallel zu den quer verlaufenden Rahmenteilen 18, 19. Für eine reibungsarme Abstützung des mittleren Bereichs der Platte 7 sind an Tragarmen 12 Rollen 10 gelagert, über welche die Platte 7 beweglich geführt ist. Anstelle der Rollen kann auch eine geradlinige Umlenkfläche am Stützbügel 6 vorgesehen sein, über welche der mittlere Teil der biegeelastischen Platte 7 reibungsarm geführt ist. Die Rollen 10 bzw. die anderweitig gebildete mittlere Stützstelle 15 liegt an der Innenfläche des mittleren Bereiches der biegeelastischen Platte 7 an.

Der Schwenkwinkel des Hebels 17 ist kleiner als der Schwenkwinkel des Rahmens 4, wenn der Radschutzbogen 13 zwischen der geöffneten und er geschlossenen Position bewegt wird. Wenn der Rahmen 4 aus der geöffneten Position in die geschlossene Position verschenkt wird, wird ebenfalls der Hebel 17 mitverschwenkt, wobei zwischen dem Rahmen 4 und dem Hebel 17 ein geeignetes Getriebe wirksam sein kann oder durch einen Anschlag ein Weiterverschwenken des Hebels 17 verhindert wird. Der Hebel 17 wird in der in Figur 2 dargestellten angehobenen Position angehalten, so dass die drei Stützstellen, nämlich die vordere Stützstelle 14, die hintere Stützstelle 16 und die mittlere Stützstelle 15 in den Ecken eines Dreiecks angeordnet sind. Die mittlere Stützstelle 15 bildet aufgrund der verringerten Schenkbewegung des Hebels 17 eine obere Stützstelle, welche an der Innenseite der biegeelastischen Platte anliegt. Aufgrund ihrer Biegeelastizität nimmt die Platte 7 die in Figur 2 dargestellte Bogenform an und umhüllt den oben liegenden Umfang des an der Hauptwelle 2 befestigten Kraftfahrzeugrades 3. Beim Verschwenken zwischen der geöffneten und der geschlossenen Position bewegt sich die Platte 7 über die an der Innenfläche anliegende Umlenkstelle 15 und die an der äußeren Oberfläche anliegenden Umlenkstelle 16. Wie schon erläutert, werden die Umlenkstellen beim dargestellten Ausführungsbeispiel von den Rollen 10 und den Rollen 11 gebildet. Anstelle der Rollen, können auch andere reibungsarme Umlenkstellen, beispielsweise Stäbe verwendet werden.

Anstelle einer schwenkbaren Lagerung des Hebels 17 kann dieser auch fest als Stützeinrichtung am Maschinengehäuse 1 vorgesehen sein, so dass eine ortsfeste Umlenkstelle 15 geschaffen wird, welche im mittleren Bereich der Längsausdehnung an der Innenseite der biegeelastischen Folie 7 anliegt.

In bevorzugter Weise befindet sich der Hebel 17 neben der einen Längskante der Platte 7, insbesondere an der Innenseite (linke Seite in Figur 3) und das sich längs erstreckende Rahmenteil 20 des Rahmens 4 an neben der anderen Längskante an der Außenseite (rechte Seite in der Figur 3). Hierdurch wird auch bei ortsfester Anordnung des Hebels 17 ein unbehindertes Öffnen und Schließen des Radschutzbogens 13 gewährleistet.

Ferner ist es möglich, zwischen der hinteren Abstützstelle 16, welche etwa in Höhe der Hauptwelle 2 der Auswuchtmaschine angeordnet ist, und der oben liegenden Abstützstelle 15, welche in einem Bogenwinkelmaß von etwa 70° bis annähernd 90° von der hinteren Abstützstelle 16 entfernt liegt, weitere ortsfeste Abstützstellen oder eine durchgehende ortsfeste Führung, ähnlich der ortsfesten Führungseinrichtung in der DE 100 12 356 A1, vorzusehen. Diese Führungseinrichtung oder diese zusätzlichen Abstützstellen sind so angeordnet dass sie der gewünschten Bogenform, welche die biegeelastische Platte 7 in diesem Bereich aufweisen soll, angepasst sind. Bei dieser Ausführungsform ist das außenliegende Rahmenteil 20 vorzugsweise als Teleskopstange ausgebildet, wenn bei diesem Ausführungsbeispiel die Platte 7 in die geöffnete Form gebracht wird, verschiebt sie sich an ihrem rückwärtigen Ende von der hinteren Abstützstelle 16 nach unten, wobei sie gegebenenfalls durch eine zusätzliche Führungseinrichtung oder selbsttätig in die ebene bzw. flache Form, welche im wesentlichen vertikal positioniert ist, gebracht wird.

Beim Zurückbringen der biegeelastischen Platte 7 aus der in der Figur 2 dargestellten geschlossenen Position, in die in den Figuren 1 und 3 dargestellte geöffnete Position wird die Platte aus ihrer gebogenen Form aufgrund der im Plattenmaterial wirkenden bzw. gespeicherten Rückstellkraft selbsttätig in die plane bzw. ebene Form zurückgebracht. In der ebenen, vertikalen Anordnung besteht kein wesentlicher zusätzlicher Platzbedarf hinter dem Maschinengehäuse 1.

Die Platte 7 besteht aus einem geeigneten biegeelastischen Material, beispielsweise Metall oder Kunststoff mit entsprechender Dicke. Es ist jedoch auch möglich eine zwei- oder mehrlagige Platte zu verwenden, wobei wenigstens eine Schicht bzw. Lage zum Auffangen von vom drehenden Radabfliegenden Teilen dient und die in der Figur dargestellte rechteckige Form. Die wenigstens eine weiter Lage bzw. Schicht kann vorzugsweise zur Dimensionierung örtlicher Biegemomente entlang der Längsausdehnung der Platte 7 dienen. Hierdurch kann eine gewünschte Bogenform in der geschlossenen Stellung erreicht werden. Vorzugsweise besitzt die biegeelastische Platte 7 in der geschlossenen Position eine Kreisbogenform.

### [Bezugszeichenliste]

- 1: Maschinengehäuse
- 2: Hauptwelle
- 3: Kraftfahrzeugrad
- 4: Schwenkbarer Rahmen
- 5: Lagereinrichtung
- 6: Stützbügel
- 7: Biegeelastische Platte
- 8: Festes Radschutzteil
- 9: Befestigungsstelle
- 10: Rolle
- 11: Rolle (Rollenpaar)
- 12: Tragarm
- 13: Radschutzbogen
- 14: Vordere Stützstelle
- 15: Mittlere Stützstelle
- 16: Hintere Stützstelle
- 17: Stützeinrichtung (Hebel)
- 18: Vorderes querverlaufendes Rahmenteil
- 19: Hinteres querverlaufendes Rahmenteil
- 20: Längsrahmenteil
- 21: Schwenkachse

## Patentansprüche

1. Radschutzvorrichtung einer Radauswuchtmaschine mit einem Radschutzbogen (13) und einer Lagereinrichtung (5) für eine bewegbare Lagerung des Radschutzbogens an einem Maschinengehäuse (1) der Auswuchtmaschine, wobei der Radschutzbogen (13) zwischen einer geöffneten Position, in welcher der Radschutzbogen im wesentlich vertikal angeordnet ist, und einer geschlossenen Position, in welcher der Radschutzbogen in einer im wesentlichen horizontalen Anordnung über einer Hauptwelle (2) der Auswuchtmaschine angeordnet ist, bewegbar ist,
**dadurch gekennzeichnet, dass** der Radschutzbogen (13) eine biegeelastische Platte (7) aufweist, welche von einem am Maschinengehäuse (1) gelagerten zwischen der geöffneten und der geschlossenen Position bewegbaren Rahmen (4) geführt ist, wobei die biegeelastische Platte (7) in der geöffneten Position eine im wesentlichen plane Form aufweist und in der geschlossenen Position bogenförmig verformt ist.

2. Radschutzvorrichtung nach Anspruch 1,
**dadurch gekennzeichnet, dass** die biegeelastische Platte (7) in ihrer Längsausdehnung zumindest an drei Stützstellen (14 - 16) am Maschinengehäuse (1) abgestützt ist.

3. Radschutzvorrichtung nach Anspruch 1 oder 2,
**dadurch gekennzeichnet, dass** die biegeelastische Platte (7) mittels des Rahmens (4) am Maschinengehäuse (1) gelagert ist.

4. Radschutzvorrichtung nach einem der Ansprüche 1 bis 3,
**dadurch gekennzeichnet, dass** der Rahmen (4) schwenkbar am Maschinengehäuse (1) gelagert ist.

5. Radschutzvorrichtung nach einem der Ansprüche 1 bis 4,
**dadurch gekennzeichnet, dass** die biegeelastische Platte (7) an wenigstens einer Stützstelle (14) fest mit dem Rahmen (4) verbunden ist und an den wenigstens beiden anderen Stützstellen (15, 16) gegenüber dem Rahmen (4) beweglich am Rahmen (4) abgestützt ist.

6. Radschutzvorrichtung nach einem der Ansprüche 1 bis 5,
**dadurch gekennzeichnet, dass** die biegeelastische Platte (7) aus der gebogenen Form in die ebene Form rückfedernd biegeelastisch ausgebildet ist.

7. Radschutzvorrichtung nach einem der Ansprüche 1 bis 6,
**dadurch gekennzeichnet, dass** die biegeelastische Platte (7) in der geschlossenen Position etwa eine Kreisbogenform aufweist.

8. Radschutzvorrichtung nach einem der Ansprüche 2 bis 7,
**dadurch gekennzeichnet, dass** die Stützstellen (14 - 16) an der Platte (7) zumindest im Bereich der beiden Enden der Platte (7) und in einem mittleren Bereich der Platte (7) angeordnet sind.

9. Radschutzvorrichtung nach einem der Ansprüche 2 bis 8,
**dadurch gekennzeichnet, dass** eine Stützstelle (16) am hinteren Ende der Platte (7) im Bereich der Lagereinrichtung (5) vorgesehen ist.

10. Radschutzvorrichtung nach Anspruch 9,
**dadurch gekennzeichnet, dass** an der im Bereich der Lagereinrichtung (5) angeordnete Stützstelle (16) die Platte (7) gegenüber dem Rahmen (4) beweglich geführt ist.

11. Radschutzvorrichtung nach einem der Ansprüche 1 bis 10,
**dadurch gekennzeichnet, dass** die biegeelastische Platte (7) in ihrem mittleren Bereich der Längsausdehnung an der dort liegenden Abstützstelle (15) beweglich geführt ist.

12. Radschutzvorrichtung nach Anspruch 11,
**dadurch gekennzeichnet, dass** die etwa im mittleren Bereich der Platte (7) angeordnete Abstützstelle (5) wenigstens ein Stützelement (10) aufweist, an welchem die Platte (7) beweglich geführt ist.

13. Radschutzvorrichtung nach einem der Ansprüche 2 bis 12,
**dadurch gekennzeichnet, dass** die etwa im mittleren Bereich der Platte (7) liegende Abstützstelle in der geschlossenen Position oberhalb der Hauptwelle (2) der Auswuchtmaschine angeordnet ist.

14. Radschutzvorrichtung nach einem der Ansprüche 1 bis 13,
**dadurch gekennzeichnet, dass** die Abstützstellen (14) und (16) an den beiden Enden der biegeelastischen Platte (7) in der geschlossenen Position etwa in Höhe der Hauptwelle (2) der Auswuchtmaschine oder geringfügig darüber angeordnet sind.

15. Radschutzvorrichtung nach einem der Ansprüche 2 bis 14,
**dadurch gekennzeichnet, dass** die etwa im mittleren Bereich der Platte (7) liegende Stützstelle (15) an einer Stützeinrichtung (17), welche schwenkbar oder ortsfest am Maschinengehäuse (1) gelagert ist, angeordnet ist.

16. Radschutzvorrichtung nach Anspruch 15,
**dadurch gekennzeichnet, dass** die Stützeinrichtung (17) als schwenkbarer Hebel ausgebildet ist, welcher in der geöffneten Position etwa parallel zum Rahmen (4) angeordnet ist.

17. Radschutzvorrichtung nach Anspruch 15 oder 16,
**dadurch gekennzeichnet, dass** die als Hebel ausgebildete Stützeinrichtung (17) beim Verschwenken aus der geöffneten Position in die geschlossene Position einen geringeren Schwenkwinkel aufweist, als der Rahmen (4).

18. Radschutzvorrichtung nach einem der Ansprüche 1 bis 17,
**dadurch gekennzeichnet, dass** die biegeelastische Platte (7) an ihrem entgegengesetzt zur Lagereinrichtung (5) liegenden Ende fest mit dem Rahmen (4) verbunden ist.

19. Radschutzvorrichtung nach einem der Ansprüche 1 bis 18,
**dadurch gekennzeichnet, dass** die biegeelastische Platte (7) mehrlagig ausgebildet ist.

20. Radschutzvorrichtung nach einem der Ansprüche 1 bis 19,
**dadurch gekennzeichnet, dass** am Rahmen (4) quer zur Längsrichtung der Platte verlaufende Rahmenteile (18, 19) im Bereich der beiden Enden der biegeelastischen Platte (7) vorgesehen sind.

21. Radschutzvorrichtung nach einem der Ansprüche 1 bis 20,
**dadurch gekennzeichnet, dass** am hinteren Ende der biegeelastischen Platte (7) die Stützeinrichtung (16) an der Außenseite der Platte (7) und im mittleren Bereich der Platte (7) die Stützeinrichtung (15) an der Innenseite der Platte (7) anliegt.

## Claims

1. A wheel guard arrangement of a wheel balancing machine comprising an arcuate wheel guard member (13) and a mounting device (5) for movably mounting the arcuate wheel guard member on a housing (1) of the balancing machine, wherein the arcuate wheel guard member (13) is movable between an open position in which the arcuate wheel guard member is arranged substantially vertically and a closed position in which the arcuate wheel guard member is arranged in a substantially horizontal arrangement over the main shaft (2) of the balancing machine,
**characterised in that** the arcuate wheel guard member (13) has a flexurally elastic plate (7) which is guided by a frame (4) supported on the machine housing (1) and movable between the open and the closed positions, wherein the flexurally elastic plate (7) in the open position is of a substantially flat shape and in the closed position it is deformed in an arcuate configuration.

2. A wheel guard arrangement according to claim 1 **characterised in that** in its longitudinal extent the flexurally elastic plate (7) is supported on the machine housing (1) at least at three support locations (14-16).

3. A wheel guard arrangement according to claim 1 or claim 2 **characterised in that** the flexurally elastic plate (7) is mounted to the machine housing (1) by means of the frame (4).

4. A wheel guard arrangement according to one of claims to 3 **characterised in that** the frame (4) is mounted pivotably to the machine housing (1).

5. A wheel guard arrangement according to one of claims 1 to 4 **characterised in that** the flexurally elastic plate (7) is fixedly connected to the frame (4) at at least one support location (14) and is supported on the frame (4) movably with respect to the frame (4) at the at least two other support locations (15, 16).

6. A wheel guard arrangement according to one of claims 1 to 5 **characterised in that** the flexurally elastic plate (7) is of a flexurally elastic nature for resilient return from the arcuate shape into the flat shape.

7. A wheel guard arrangement according to one of claims 1 to 6 **characterised in that** in the closed position the flexurally elastic plate (7) is approximately in the shape of a circular arc.

8. A wheel guard arrangement according to one of claims 2 to 7**characterised in that** the support locations (14-16) on the plate (7) are arranged at least in the region of the two ends of the plate (7) and in a central region of the plate (7).

9. A wheel guard arrangement according to one of claims 2 to 8 **characterised in that** there is provided a support location (16) at the rear end of the plate (7) in the region of the mounting device (5).

10. A wheel guard arrangement according to claim 9 **characterised in that** the plate (7) is guided movably with respect to the frame (4) at the support location (16) which is in the region of the mounting device (5).

11. A wheel guard arrangement according to one of claims 1 to 10 **characterised in that** the flexurally elastic plate (7) in the central region of the longitudinal extent thereof is guided movably at the support location (15) which is disposed there.

12. A wheel guard arrangement according to claim 11 **characterised in that** the support location (5) arranged substantially in the central region of the plate (7) has at least one support element (10) at which the plate (7) is movably guided.

13. A wheel guard arrangement according to one of claims 2 to 12 **characterised in that** the support location arranged substantially in the central region of the plate (7) is arranged above the main shaft (2) of the balancing machine in the closed position.

14. A wheel guard arrangement according to one of claims 2 to 13 **characterised in that** the support locations (14) and (16) at the two ends of the flexurally elastic plate (7) in the closed position are arranged substantially at the height of the main shaft (2) of the balancing machine or slightly thereabove.

15. A wheel guard arrangement according to one of claims 2 to 14 **characterised in that** the support location (15) arranged substantially in the central region of the plate (7) is arranged at a support device (17) which is mounted pivotably or stationarily to the machine housing (1).

16. A wheel guard arrangement according to claim 15 **characterised in that** the support device (17) is in the form of a pivotable lever which is arranged in the closed position substantially parallel to the frame (4).

17. A wheel guard arrangement according to claim 15 or claim 16 **characterised in that** the support device (17) which is in the form of a lever, upon pivotal movement out of the open position into the closed position, has a smaller angle of pivotal movement than the frame (4).

18. A wheel guard arrangement according to one of claims 1 to 17 **characterised in that** the flexurally elastic plate (7), at its end in opposite relationship to the mounting device (5), is fixedly connected to the frame (4).

19. A wheel guard arrangement according to one of claims 1 to 18 **characterised in that** the flexurally elastic plate (7) is of a multi-layer nature.

20. A wheel guard arrangement according to one of claims 1 to 19 **characterised in that** provided on the frame (4) are frame members (18, 19) extending transversely with respect to the longitudinal direction of the plate in the region of the two ends of the flexurally elastic plate (7).

21. A wheel guard arrangement according to one of claims 1 to 20 **characterised in that** at the rear end of the flexurally elastic plate (7) the support device (16) bears against the outside of the plate (7) and in the middle region of the plate (7) the support device (15) bears against the inside of the plate (7).

## Revendications

1. Dispositif de protection de roue d'une machine d'équilibrage de roue, comportant un cintre (13) de protection de roue et un ensemble (5) de palier pour un montage mobile du cintre de protection de roue sur un carter (1 ) de machine de la machine d'équilibrage, le cintre (13) de protection de roue pouvant être déplacé entre une position ouverte, dans laquelle le cintre de protection de roue est disposé sensiblement verticalement, et une position fermée, dans laquelle le cintre de protection de roue est disposé dans une disposition sensiblement horizontale au-dessus d'un arbre (2) principal de la machine d'équilibrage,
**caractérisé en ce que** le cintre (13) de protection de roue comporte une plaque (7) élastique en flexion, qui est guidée par un cadre (4) monté sur le carter (1) de machine à déplacement entre la position ouverte et la position fermée, la plaque (7) élastique en flexion ayant une forme sensiblement plane dans la position ouverte et étant déformée en cintre dans la position fermée.

2. Dispositif de protection de roue suivant la revendication 1, **caractérisé en ce que** la plaque (7) élastique en flexion est soutenue, dans son étendue longitudinale, en au moins trois points (14 - 16) d'appui sur le carter (1) de machine.

3. Dispositif de protection de roue suivant la revendication 1 ou 2, **caractérisé en ce que** la plaque (7) élastique en flexion est montée au moyen du cadre (4) sur le carter (1 ) de machine.

4. Dispositif de protection de roue suivant l'une des revendications 1 à 3, **caractérisé en ce que** le cadre (4) est monté à pivotement sur le carter (1) de machine.

5. Dispositif de protection de roue suivant l'une des revendications 1 à 4, **caractérisé en ce que** la plaque (7) élastique en flexion est fixement assemblée au cadre (4) en au moins un point (14) d'appui et, en au moins deux autres points (15, 16) d'appui, est soutenue sur le cadre (4) à déplacement par rapport au cadre (4).

6. Dispositif de protection de roue suivant l'une des revendications 1 à 5, **caractérisé en ce que** la plaque (7) élastique en flexion est réalisée élastique en flexion avec retour élastique de la forme cintrée à la forme plane.

7. Dispositif de protection de roue suivant l'une des revendications 1 à 6, **caractérisé en ce que** la plaque (7) élastique en flexion possède approximativement une forme d'arc de cercle dans la position fermée.

8. Dispositif de protection de roue suivant l'une des revendications 2 à 7, **caractérisé en ce que** les points (14 - 16) d'appui sur la plaque (7) sont disposés au moins dans la région des deux extrémités de la plaque (7) et dans une région centrale de la plaque (7).

9. Dispositif de protection de roue suivant l'une des revendications 2 à 8, **caractérisé en ce qu'**un point (16) d'appui est prévu à l'extrémité arrière de la plaque (7) dans la région de l'ensemble (5) de palier.

10. Dispositif de protection de roue suivant la revendication 9, **caractérisé en ce que**, au point (16) d'appui disposé dans la région de l'ensemble (5) de palier, la plaque (7) est guidée à déplacement par rapport au cadre (4).

11. Dispositif de protection de roue suivant l'une des revendications 1 à 10, **caractérisé en ce que** la plaque (7) élastique en flexion est, dans la région centrale de son étendue longitudinale, guidée à déplacement au point (15) d'appui qui s'y trouve.

12. Dispositif de protection de roue suivant la revendication 11, **caractérisé en ce que** le point (15) d'appui disposé approximativement dans la région centrale de la plaque (7) comporte au moins un élément (10) de soutien sur lequel la plaque (7) est guidée à déplacement.

13. Dispositif de protection de roue suivant l'une des revendications 2 à 12, **caractérisé en ce que** le point d'appui situé approximativement dans la région centrale de la plaque (7) est disposé, dans la position fermée, au-dessus de l'arbre (2) principal de la machine d'équilibrage.

14. Dispositif de protection de roue suivant l'une des revendications 2 à 13, **caractérisé en ce que** les points (14 et 16) d'appui aux deux extrémités de la plaque (7) élastique en flexion sont disposés, dans la position fermée, approximativement à la hauteur de l'arbre (2) principal de la machine d'équilibrage ou légèrement au-dessus.

15. Dispositif de protection de roue suivant l'une des revendications 2 à 14, **caractérisé en ce que** le point (15) d'appui situé approximativement dans la région centrale de la plaque (7) est disposé sur un équipement (17) d'appui qui est monté à pivotement ou à poste fixe sur le carter (1) de machine.

16. Dispositif de protection de roue suivant la revendication 15, **caractérisé en ce que** l'équipement (17) d'appui est réalisé sous forme de levier pivotant, qui dans la position ouverte est disposé environ parallèlement au cadre (4).

17. Dispositif de protection de roue suivant la revendication 15 ou 16, **caractérisé en ce que** l'équipement (17) d'appui réalisé sous forme de levier a, lors du pivotement de la position ouverte dans la position fermée, un plus petit angle de pivotement que le cadre (4).

18. Dispositif de protection de roue suivant l'une des revendications 1 à 17, **caractérisé en ce que** la plaque (7) élastique en flexion est, à son extrémité située à l'opposé de l'ensemble (5) de palier, fixement assemblée au cadre (4).

19. Dispositif de protection de roue suivant l'une des revendications 1 à 18, **caractérisé en ce que** la plaque (7) élastique en flexion est réalisée à plusieurs couches.

20. Dispositif de protection de roue suivant l'une des revendications 1 à 19, **caractérisé en ce que** des éléments (18, 19) de cadre s'étendant transversalement à la direction de la plaque sont prévus sur le cadre (4) dans la région des deux extrémités de la plaque (7) élastique en flexion.

21. Dispositif de protection de roue suivant l'une des revendications 1 à 20, **caractérisé en ce que**, à l'extrémité arrière de la plaque (7) élastique en flexion, l'équipement (16) d'appui s'applique contre le côté extérieur de la plaque (7) et, dans la région centrale de la plaque (7), l'équipement (15) d'appui s'applique contre le côté intérieur de la plaque (7).
